# EUROPEAN PATENT SPECIFICATION

(11) **EP 3 437 149 B1**
(45) Date of publication and mention of the grant of the patent: **02.10.2019**
(21) Application number: 18708837.2
(22) Date of filing: 21.02.2018
(51) Int. Cl.: H01M 4/36, H01M 4/485, H01M 4/505, H01M 4/525, H01M 10/0525

(54) **CORE-SHELL ELECTROACTIVE MATERIALS**
ELEKTROAKTIVE KERN-HÜLLE-MATERIALIEN
MATÉRIAUX ÉLECTROACTIFS C UR-ÉCORCE

(30) Priority: 22.02.2017 US 201762461890 P
(43) Date of publication of application: 06.02.2019
(73) Proprietor: Lionano Inc., Woburn MA 01801 (US)
(72) Inventor: REN, Dong, Wilmington MA 01887 (US); SHEN, Yun, Changshu 215513 (CN); YU, Yingchao, Cambridge MA 02141 (US)
(74) Representative: Potter Clarkson
(86) International application number: PCT/US2018/018986
(87) International publication number: WO 2018/156607

(56) References cited:
- EP-A1- 2 405 521
- WO-A2-2013/070298
- US-A1- 2008 044 736
- US-A1- 2015 357 638
- US-A1- 2017 047 609

## Description

### RELATED APPLICATIONS

This application claims the benefit of U.S. Provisional Patent Application Serial No. 62/461,890, filed February 22, 2017, entitled "Core-Shell Electroactive Materials,".

### FIELD

The present invention generally relates to materials for electrochemical cells, e.g., for use in batteries such as lithium-ion batteries, and other applications.

### BACKGROUND

Advanced energy storage devices such as lithium ion batteries (LIBs) must keep up with the development of electronics that demand higher energy densities and faster charging rates. Meeting these demands could unlock a broad scope of technological advances, such as longer ranges for electric vehicles (EVs), or solutions to off-peak renewable energy storage, for example. This may require advances, for example, in the gravimetric or volumetric energy densities of LIBs, to reduce the total weight and volume for the battery system. Furthermore, batteries with fast-charging rates capable of quickly delivering a high current without reducing cycle life are desirable for certain applications. In order to keep up with the ever-changing demands of technology, consumers, or regulators, improvements in factors such as the capacity, lifetime, charging rate, or safety of batteries may also be desirable.

Cathode materials based on lithium, nickel, magnesium, cobalt transition-metal oxides have the potential to advance the performance of LIBs, e.g., based on their high specific capacity at high voltages. However, manufacturing these materials (e.g., lithium nickel cobalt aluminum oxide (NCA) or lithium nickel manganese cobalt oxide (NMC)) may be hindered by the materials' sensitivity to humidity, or the prohibitive costs of the equipment used to prevent humidity contamination. NCA and NMC applications can also be limited in some cases by the poor thermal stability exhibited by transition-metal compositions, which may release oxygen that accelerates the decomposition of electrolytes, which may lead to safety problems, such as thermal runaway. The cycle life of most NMC materials cannot satisfy the goals set forth by organizations such as the United States Advanced Battery Consortium (USABC). Therefore, improvements in such materials are necessary.

EP 2 405 521 A1 describes a positive electrode active material for a secondary lithium battery, a method of preparing the same, and a lithium battery using the nickel-based positive electrode active material, wherein said positive electrode active material comprises a lithium nickel complex oxide material having a surface portion and a core portion, in which lithium ions are distributed in a concentration gradient decreasing from the surface portion to the core portion of the lithium nickel complex oxide material.

US 2017/047609 A1 describes a lithium secondary battery including a cathode electrode, an anode electrode, and a separation film installed between the cathode electrode and the anode electrode, wherein the cathode electrode includes a cathode active material containing lithium-metal oxide of which at least one of metals has a continuous concentration gradient region between a core part and a surface part thereof, the anode electrode includes a ceramic coating layer on at least one surface thereof, and the separation film includes a base film, and a ceramic coating layer formed on at least one surface of the base film, such that it is possible to achieve a significantly improved effect in both of the lifespan property and penetration durability.

WO 2013/070298 A2 describes a positive electrode for lithium-ion electrochemical cells that have capacity retentions of greater than about 95% after 50 charge-discharge cycles when comparing the capacity after cycle 52 with the capacity after cycle 2 when cycled between 2.5 V and 4.7 V vs. Li/Li⁺ at 30°C. Compositions useful in the provided positive electrodes can have the formula, Li₁₊ₓ(NiₐMn_{b}Co_{c})₁₋ₓ O₂, wherein 0.05 ≤ x ≤ 0.10, a + b + c = 1, 0.6 ≤ b/a ≤ 1.1, c/(a + b) < 0.25, and a, b, and c are all greater than zero. The process of making these positive electrodes includes firing the compositions at 850°C to 925°C.

US 2008/044736 A1 describes the positive electrode of a lithium ion secondary battery including active material particles represented by LiₓNi_{1-y}M_{y}Me_{z}O_{2+δ}, and the active material particles include a lithium composite oxide represented by LiₓNi_{1-y}M_{y}O₂, (where 0.95≤x≤1.1, 0<y≤0.75, 0.001≤z≤0.05). The element M is selected from the group consisting of alkaline-earth elements, transition elements, rare-earth elements, IIIb group elements and IVb group elements. The element Me is selected from the group consisting of Mn, W. Nb, Ta, In, Mo, Zr and Sn, and the element Me is included in a surface portion of the active material particles. The lithium content x in the lithium composite oxide in an end-of-discharge state when a constant current discharge is performed at a temperature of 25°C. with a current value of 1C and an end-of-discharge voltage of 2.5 V satisfies 0.85≤x≤-0.013Ln(z)+0.871.

US 2015/357638 describes a cathode active material on which at least one coating layer is formed, a method for manufacturing the same, and a lithium secondary battery including the same. According to the present invention, since the coating layer with high electrical conductivity is formed on a surface of the cathode active material, the electrical conductivity is improved to enhance charge/discharge and cycle life characteristics and thermal stability of the battery.

### SUMMARY

The invention is as defined in the accompanying claims. The present invention generally relates to materials for electrochemical cells, e.g., for use in batteries such as lithium-ion batteries, and other applications.

In one aspect, the present invention is generally directed to a composition. In one set of embodiments, the composition comprises a material having a formula (Li₁₊ₐ(Ni_{q}MᵣCo_{1-q-r})O₂)ₓ(Li₁₊ₐ(NiₛMnₜCo₁₋ₛ₋ₜ)O₂)₁₋ₓ, wherein M is Mn and/or Al; x is a numerical value inclusively ranging from 0.70 to 0.95; a is a numerical value inclusively ranging from 0.01 to 0.07; q is a numerical value inclusively ranging from 0.80 to 0.96; r is a numerical value inclusively ranging from 0.01 to 0.10; s is a numerical value inclusively ranging from 0.34 to 0.70; t is a numerical value inclusively ranging from 0.20 to 0.40; 1-q-r is greater than 0; and 1-s-t is greater than 0.

According to another set of embodiments, the composition comprises a plurality of particles, at least some of which comprise a core and a shell at least partially surrounding the core, the core having a formula Li₁₊ₐ(Ni_{q}MᵣCo_{1-q-r})O₂, the shell having a formula Li₁₊ₐ(NiₛMnₜCo₁₋ₛ₋ₜ)O₂, wherein M is Mn and/or Al; x is a numerical value inclusively ranging from 0.70 to 0.95; a is a numerical value inclusively ranging from 0.01 to 0.07; q is a numerical value inclusively ranging from 0.80 to 0.96; r is a numerical value inclusively ranging from 0.01 to 0.10; s is a numerical value inclusively ranging from 0.34 to 0.70; t is a numerical value inclusively ranging from 0.20 to 0.40; 1-q-r is greater than 0; and 1-s-t is greater than 0.

The composition comprises a plurality of particles, at least some of which comprise a core and a shell at least partially surrounding the core. In some cases, at least some of the particles are formed by a process comprising precipitating nickel, manganese and/or aluminum, and cobalt from a first solution to produce particles in a reactor, and precipitating nickel, manganese and/or aluminum, and cobalt from a second solution onto the particles to form core-shell particles within the reactor.

The composition comprises a plurality of particles, at least some of which comprise a core and a shell at least partially surrounding the core. In some embodiments, at least some of the particles are formed by a process comprising precipitating nickel, manganese and/or aluminum, and cobalt from a first solution to produce particles at a first pH, and precipitating nickel, manganese and/or aluminum, and cobalt from a second solution onto the particles to form core-shell particles at a second pH.

The composition comprises a plurality of particles, at least some of which comprise a core and a shell at least partially surrounding the core. In some embodiments, at least some of the particles are formed by a process comprising precipitating nickel, manganese and/or aluminum, and cobalt from a first solution to produce particles at a first temperature, and precipitating nickel, manganese and/or aluminum, and cobalt from a second solution onto the particles to form core-shell particles at a second temperature.

The present application also discloses a process. The process comprises precipitating nickel, manganese and/or aluminum, and cobalt from a first solution to produce particles in a reactor; and precipitating nickel, manganese, and cobalt from a second solution onto the particles to form core-shell particles within the reactor.

The process comprises precipitating nickel, manganese and/or aluminum, and cobalt from a first solution to produce particles at a first pH; and precipitating nickel, manganese, and cobalt from a second solution onto the particles to form core-shell particles at a second pH.

The process comprises precipitating nickel, manganese and/or aluminum, and cobalt from a first solution to produce particles at a first temperature; and precipitating nickel, manganese, and cobalt from a second solution onto the particles to form core-shell particles at a second temperature.

The process comprises precipitating nickel, manganese and/or aluminum, and cobalt from a first solution to produce particles at a first stirring rate; and precipitating nickel, manganese, and cobalt from a second solution onto the particles to form core-shell particles at a second stirring rate.

In addition, in some aspects, the present application discloses certain electroactive materials, e.g., for lithium-ion batteries or other applications. For example, positive electroactive materials, including lithium nickel manganese cobalt oxide compound or lithium nickel cobalt aluminum oxide compounds. In some cases, the materials may have a core-shell structure having the formulae (Li₁₊ₐ[Ni_{q}MᵣCo_{1-q-r}]O₂)ₓ•(Li₁₊ₐ[NiₛMnₜCo₁₋ₛ₋ₜ]O₂)₁₋ₓ, where M may be Mn and/or Al. In some embodiments, x is a numerical value inclusively ranging from 0.70 to 0.95, a is a numerical value inclusively ranging from 0.01 to 0.07, q is a numerical value inclusively ranging from 0.80 to 0.96, r is a numerical value inclusively ranging from 0.01 to 0.10, s is a numerical value inclusively ranging from 0.34 to 0.70, t is a numerical value inclusively ranging from 0.20 to 0.40, 1-q-r is greater than 0, and 1-s-t is greater than 0.

The positive electroactive material has a core-shell structure with (Li₁₊ₐ[Ni_{q}MᵣCo_{1-q-r}]O₂)ₓ as a core, and (Li₁₊ₐ[NiₛMnₜCo₁₋ₛ₋ₜ]O₂)₁₋ₓ as a shell. M may be Mn, Al, or a combination of these. In some embodiments, x is a numerical value inclusively ranging from 0.70 to 0.95, a is a numerical value inclusively ranging from 0.01 to 0.07, q is a numerical value inclusively ranging from 0.80 to 0.96, r is a numerical value inclusively ranging from 0.01 to 0.10, s is a numerical value inclusively ranging from 0.34 to 0.70, t is a numerical value inclusively ranging from 0.20 to 0.40, 1-q-r is greater than 0, and 1-s-t is greater than 0. In addition, the positive electroactive material has a core-shell structure with Li₁₊ₐ[Ni_{q}MᵣCo_{1-q-r}]O₂ as a core, and Li₁₊ₐ[NiₛMnₜCo₁₋ₛ₋ₜ]O₂ as a shell. M may be Mn, Al, or a combination of these. In some embodiments, a is a numerical value inclusively ranging from 0.01 to 0.07, q is a numerical value inclusively ranging from 0.80 to 0.96, r is a numerical value inclusively ranging from 0.01 to 0.10, s is a numerical value inclusively ranging from 0.34 to 0.70, t is a numerical value inclusively ranging from 0.20 to 0.40, 1-q-r is greater than 0, and 1-s-t is greater than 0.

In some cases, the size of a particle can be expressed as D50, where D50 is a particle size diameter which is larger than 50% (by number) of the total particles that are present (also known as the median number). The typical size distribution of the particles can be expressed in Span, defined as (D90-D10)/D50, where D90 and D10 respectively stand for particle diameters that are larger than 90% and 10% of all the particles (by number). In certain embodiments, the positive electroactive material has a particle size distribution, in Span, of from about 0.55 to about 1.00. Other Spans are discussed in detail below.

The present application discloses synthesis methods for preparing materials such as those described herein. For instance, the material may be a lithium nickel manganese cobalt oxide positive electroactive material, optionally with core-shell structure. The method, comprises the steps of (i) preparing a metal precursor comprising nickel, manganese and cobalt as core; (ii) growing a shell metal precursor comprising nickel, manganese and cobalt on the core to form a core-shell metal precursor comprising nickel, manganese and cobalt; (iii) mixing the core-shell metal precursor with a lithium-containing salt to form a lithium-metal precursor mixture; and (iv) calcining the lithium-metal precursor mixture to obtain the positive electroactive material. The mixture may be calcined at a temperature in the range of from about 680°C to about 880°C in an oxygen-rich atmosphere. This synthesis method is a simple one that can be executed on a large scale in certain cases. Additional methods are discussed in detail herein.

It is disclosed both a core and a shell metal precursor comprising nickel, manganese, and cobalt may be prepared by dissolving salts of nickel, manganese, and cobalt in a solvent such as distilled water, methanol, ethanol, or mixtures thereof, and precipitating the metal precursor from the solution.

The core metal precursor comprising nickel, manganese and/or aluminum and cobalt may be prepared by (i) dissolving salts of nickel, manganese and/or aluminum, and cobalt in a solvent such as distilled water, methanol, ethanol, or mixtures thereof; (ii) pumping the solution into a reactor under nitrogen atmosphere and concurrently, separately pumping a desired amount of sodium hydroxide and ammonia hydroxide; (iii) maintaining the pH in the range of from about 10.2 to about 11.2, and the temperature in the range of from about 50°C to about 80°C and (iv) precipitating the metal precursor from the solution.

The shell metal precursor comprising nickel, manganese and cobalt may be prepared by (i) dissolving salts of nickel, manganese, and cobalt in a solvent such as distilled water, methanol, ethanol, or mixtures thereof; (ii) pumping the solution into the reactor containing core metal precursor under nitrogen atmosphere and concurrently, separately pumping a desired amount of sodium hydroxide and ammonia hydroxide; (iii) maintaining the pH in the range of from about 10.8 to about 12.0, and the temperature in the range of from about 50°C to about 80°C and (iv) precipitating the shell metal precursor on the core metal precursor from the solution.

The core-shell metal precursor comprising nickel, manganese and/or aluminum, and cobalt may be prepared by (i) preparing the core metal precursor from the solution; (ii) forming the shell metal precursor on the core metal precursor; (iii) forming the core-shell metal precursor from the solution.

It is disclosed a lithium ion electrochemical cell composed of a positive electrode comprising the positive electroactive material described, a lithium intercalation negative electroactive material, a suitable non-aqueous electrolyte, and a separator between the negative electroactive material and positive electroactive material.

In another aspect, the present disclosure encompasses methods of making one or more of the embodiments described herein, for example, a material for a lithium-ion battery. In still another aspect, the present disclosure encompasses methods of using one or more of the embodiments described herein, for example, a material for a lithium-ion battery. Other aspects of the present invention are described in more detail below.

Other advantages and novel features of the present invention will become apparent from the following detailed description of various non-limiting embodiments of the invention when considered in conjunction with the accompanying figures.

### BRIEF DESCRIPTION OF THE DRAWINGS

Non-limiting embodiments of the present invention will be described by way of example with reference to the accompanying figures, which are schematic and are not intended to be drawn to scale. In the figures, each identical or nearly identical component illustrated is typically represented by a single numeral. For purposes of clarity, not every component is labeled in every figure, nor is every component of each embodiment of the invention shown where illustration is not necessary to allow those of ordinary skill in the art to understand the invention. In the figures:
Fig. 1 is a schematic drawing of the formation process of a positive electroactive material according to one embodiment of the present invention; and
Fig. 2 shows scanning electron microscope (SEM) images of a positive electroactive material in another embodiment of the present invention.

### DETAILED DESCRIPTION

The present application generally relates to materials for electrochemical cells, e.g., for use in batteries such as lithium-ion batteries, and other applications. For example, certain embodiments of the present invention provide a positive electroactive material, which may have a core-shell structure. The material, in certain embodiments, has the formula (Li₁₊ₐ[Ni_{q}MᵣCo_{1-q- r}]O₂)ₓ•(Li₁₊ₐ[NiₛMnₜCo₁₋ₛ₋ₜ]O₂)₁₋ₓ, where M may be Mn and/or Al. In some cases, the first portion may represent the core, while the second portion may represent the shell in a core-shell particle. In certain embodiments, x is a numerical value inclusively ranging from 0.70 to 0.95, a is a numerical value inclusively ranging from 0.01 to 0.07, q is a numerical value inclusively ranging from 0.80 to 0.96, r is a numerical value inclusively ranging from 0.01 to 0.10, s is a numerical value inclusively ranging from 0.34 to 0.70, t is a numerical value inclusively ranging from 0.20 to 0.40. Additionally, the present application is directed to methods of forming particles, such as core-shell particles, by forming the core and the shell within the same reactor, and/or by altering the pH to produce the core and the shell, and/or by altering the stirring rate to produce the core and the shell, and/or by altering the feed rate to produce the core and the shell. In some embodiments, by controlling reaction parameters such as these, the materials may have a surprisingly narrow, homogeneous particle size distribution, e.g., as measured by Span or other suitable techniques.

Certain aspects are generally directed to materials for electrochemical cells, e.g., for use in batteries such as lithium-ion batteries, and other applications, as techniques for making such materials. Methods of producing materials such as lithium nickel manganese cobalt oxide are discussed. In some cases, such materials may be formed as particles, and in some cases, the particles may contain two distinguishable regions. For instance, in some cases, the particles may be present as core-shell particles, e.g., where the core and the shell of the particle have compositions that are readily distinguishable. In some cases, as discussed herein such materials may be formed by forming a material in a reactor, e.g., as a plurality of particles, then modifying the conditions of the reactor such that the particles exhibit a change in composition, e.g., forming a core-shell structure. In some cases, this may be repeated more than once, for instance, to form multiple shells. In addition, it should be understood that in some cases, the process of forming core-shell structures may be performed without removing the particles from the reactor or otherwise interrupting the reaction, as such interruptions can which otherwise make the reaction more difficult to control. However, in some embodiments, the core and the shells of the particles may be prepared separately, e.g., using different reactors or otherwise by interrupting the reaction.

In certain cases the particles may include nickel, manganese and/or aluminum, cobalt, and oxygen. The particles may also comprise lithium in some instances. Other elements (or ions) may also be present, e.g., in addition to and/or instead of these, such as sodium, chloride, sulfur, etc., such as are discussed herein.

The core and shell portions of the particles may have different compositions, or the same compositions but in different concentrations. The core and shell particles may be distinguishable under microscopy (e.g., as a visual change between the core and shell portions in a micrograph), and or by using compositional analysis techniques such as energy dispersive X-ray spectroscopy (EDX) techniques. There may be a sharp transition between the core and the shell portions, or the composition may exhibit a less sharp transition and instead vary gradually, e.g., over a distance of than about 500 nm, less than about 300 nm, less than about 100 nm, less than about less 50 nm, less than about 30 nm, or less than about 10 nm. In some cases, the relative molar amounts of an atom between the core and the shell (or vice versa) may vary by at least 0.05, at least 0.10, at least 0.15, at least 0.20, at least 0.25, at least 0.30, at least 0.35, at least 0.40, at least 0.45, or at least 0.50.

As an illustrative non-limiting example, the core may contain Ni in a molar amount ranging from 0.80 to 0.96 (e.g., q as in the formula (Li₁₊ₐ(Ni_{q}MᵣCo_{1-q-r})O₂), while the shell may contain Ni in a molar amount ranging from 0.34 to 0.70 (e.g., s as in the formula Li₁₊ₐ(NiₛMnₜCo₁₋ₛ₋ₜ)O₂), and the difference between q and s may be of the amounts described above. M may be Mn and/or Al.

Without being bound to any particular theory, it is believed that some of the materials described herein may provide superior capacity because of the ratio of the transition metal ions nickel, manganese and/or aluminum, and cobalt in the material, the percentage of nickel in the material and/or because the precipitation method for preparing the material allows more precise control the morphology of the material, e.g., as core-shell particles. In some cases, the materials may be used to prepare high-performance lithium nickel manganese cobalt oxide positive electroactive material having high capacity, superior rate capability, and long cycle life for use in a lithium-ion battery.

In one aspect, the present application is generally directed to positive electroactive materials, such as nickel-manganese-cobalt oxide (NMC) materials, e.g., for use in lithium-ion batteries or other applications. NMC positive electroactive materials are favorable for a variety of applications, such as electric vehicles, due to their balanced performance across various criteria. As mentioned, the materials may be present as particles (e.g., as discussed in more detail herein), and in some cases, the particles may have two regions that are compositionally distinguishable, e.g., as in a core-shell structure.

For instance, the positive electroactive material may have a first region and a second region (e.g., as in a core-shell particle), where a first region (e.g., a core) may have a formula Li₁₊ₐ(Ni_{q}MᵣCo_{1-q-r})O₂ where M is Mn and/or Al and a second region (e.g., a shell) may have a formula Li₁₊ₐ(NiₛMnₜCo₁₋ₛ₋ₜ)O₂. In some cases, the two regions may comprise the entirety of the particle, e.g., as expressed in the formula (Li₁₊ₐ(Ni_{q}MᵣCo_{1-q-r})O₂)ₓ(Li₁₊ₐ(NiₛMnₜCo₁₋ₛ₋ₜ)O₂)₁₋ₓ, where M is Mn and/or Al. In some cases, 0.70≤x≤0.95, 0.01≤a≤0.07, 0.80≤q≤0.96, 0.01≤r≤0.10, 0.34≤s≤0.70, 0.20≤t≤0.40 (all of these are less than or equal to); that is, x is a numerical value ranging from 0.70 to 0.95, a is a numerical value ranging from 0.01 to 0.07, q is a numerical value ranging from 0.80 to 0.96, r is a numerical value ranging from 0.01 to 0.10, s is a numerical value ranging from 0.34 to 0.70, t is a numerical value ranging from 0.20 to 0.40, 1-q-r is greater than 0, and 1-s-t is greater than 0.

Examples of positive electroactive materials include, but are not limited to, compositions where x=0.70, a=0.02, q=0.80, r=0.10, s=0.50, t=0.30; or x=0.90, a=0.05, q=0.90, r=0.05, s=0.60, t=0.20.

In some cases, the material may include lithium, i.e., the material is a lithium NMC material. However, other alkali metal ions may also be present in certain instances, e.g., in addition to and/or instead of lithium, for example, sodium. In some cases, at least 50%, at least 70%, at least 80%, at least 90%, at least 95%, or at least 99% (by mole) of the alkali metal ions within a NMC composition is lithium.

The material may also contain various amounts of nickel, manganese and/or aluminum, and cobalt. These may vary independently of each other, e.g., in the formulas Ni_{q}MᵣCoⱼ or NiₛMnₜCoₖ. In some cases, the sum of q, r, and j (or s, t, and k) is 1, i.e., there are no other ions present within the composition (other than the alkali metal ions) other than these three. Thus, j may equal (1 - q - r) or k may equal (1 - s - t). However, in other cases, the sum of q, r, and j (or s, t, and k) may actually be less than or more than 1, e.g., from 0.8 to 1.2, from 0.9 to 1.1, from 0.95 to 1.05, or from 0.98 to 1.02. Thus, the composition may be overdoped or underdoped, and/or contain other ions present in addition to nickel, manganese, and cobalt. It should be understood that, if more than one distinguishable region is present, each region may independently satisfy one or more of these criteria.

In one case the amount of nickel present (i.e., q or s) in a portion of the composition (e.g., in a core or shell) may be at least 0.34, at least 0.35, at least 0.4, at least 0.45, at least 0.5, at least 0.55, at least 0.6, at least 0.65, at least 0.7, at least 0.75, at least 0.8, at least 0.85, or at least 0.9. In some cases, q or s may independently be no more than 0.99, no more than 0.96, no more than 0.95, no more than 0.9, no more than 0.85, no more than 0.8, no more than 0.75, no more than 0.7, no more than 0.65, no more than 0.6, no more than 0.58, no more than 0.55, no more than 0.5, no more than 0.45, no more than 0.4, no more than 0.35, or no more than 0.34. Combinations of any of these are also possible e.g., q or s may independently range between 0.34 to 0.70, or between 0.80 to 0.96, etc. (all values are inclusive). As mentioned, different portions of the composition (e.g., a core and a shell of a particle) may have different compositions, each taken from the above values. In some cases, the core may have more nickel present than a shell, i.e., q may be greater than s. In addition, in some cases, q may be at least 0.05, at least 0.10, at least 0.15, at least 0.20, at least 0.25, at least 0.30, at least 0.35, at least 0.40, at least 0.45, or at least 0.50 greater than s.

The amount of manganese present (i.e., r or t) in a portion of the composition (e.g., in a core or shell) may be at least 0.01, at least 0.02, at least 0.03, at least 0.05, at least 0.1, at least 0.2, at least 0.21, at least 0.25, at least 0.3, at least 0.35, at least 0.4, at least 0.45, or at least 0.5. In some embodiments, r or t may independently be no more than 0.5, no more than 0.45, no more than 0.4, no more than 0.38, no more than 0.35, no more than 0.3, no more than 0.25, no more than 0.2, no more than 0.1, no more than 0.05, no more than 0.03, or no more than 0.02. Combinations of any of these are also e.g., r or t may independently range between 0.01 and 0.10, between 0.02 and 0.10, between 0.04 and 0.10, or between 0.1 and 0.4, etc. (all values are inclusive). As mentioned, in different portions of the composition (e.g., a core and a shell of a particle) may have different compositions, each taken from the above values. In some cases, the core may have less manganese present than a shell, i.e., r may be less than t. In addition, in some cases, t may be at least 0.05, at least 0.10, at least 0.15, at least 0.20, at least 0.25, at least 0.30, at least 0.35, at least 0.40, at least 0.45, or at least 0.50 greater than r.

The amount of aluminum present (i.e., r or t) in a portion of the composition (e.g., in a core or shell) maybe at least 0.01, at least 0.02, at least 0.03, at least 0.05, at least 0.1, at least 0.2, at least 0.21, at least 0.25, at least 0.3, at least 0.35, at least 0.4, at least 0.45, or at least 0.5. r or t may independently be no more than 0.5, no more than 0.45, no more than 0.4, no more than 0.38, no more than 0.35, no more than 0.3, no more than 0.25, no more than 0.2, no more than 0.1, no more than 0.05, no more than 0.03, or no more than 0.02. Combinations of any of these are also possible e.g., r or t may independently range between 0.01 and 0.10, between 0.02 and 0.10, between 0.04 and 0.10, or between 0.1 and 0.4, etc. (all values are inclusive). As mentioned, different portions of the composition (e.g., a core and a shell of a particle) may have different compositions, each taken from the above values. In some cases, the core may have less manganese present than a shell, i.e., r may be less than t. In addition, in some cases, t may be at least 0.05, at least 0.10, at least 0.15, at least 0.20, at least 0.25, at least 0.30, at least 0.35, at least 0.40, at least 0.45, or at least 0.50 greater than r.

In addition, it should be understood that in some embodiments, both manganese and aluminum may be present. For instance, M as discussed herein (e.g., in formulae such as Li₁₊ₐ(Ni_{q}MᵣCo_{1-q-r})O₂), M can be manganese and/or aluminum. For example, M may be 100% Mn, 100% Al, or any combination of Mn and Al. For instance, there may be at least 5%, at least 10%, at least 20%, at least 30%, at least 40%, at least 50%, at least 60%, at least 70%, at least 80%, at least 90%, or at least 95% (by mole) of Mn, with the balance being Al. In some cases, there may be no more than 95%, no more than 90%, no more than 80%, no more than 70%, no more than 60%, no more than 50%, no more than 40%, no more than 30%, no more than 20%, no more than 10%, or no more than 5% (by mole) of Mn, with the balance being Al.

Similarly, the amount of cobalt present (i.e., j or k) in a portion of the composition (e.g., in a core or shell) may be at least 0.2, at least 0.21, at least 0.25, at least 0.3, or at least 0.35. In some embodiments, j or k may independently be no more than 0.38, no more than 0.35, no more than 0.3, or no more than 0.25. Combinations of any of these are also possible e.g., j or k may independently range between 0.21 to 0.38 (all values are inclusive). As mentioned, different portions of the composition (e.g., a core and a shell of a particle) may have different compositions, each taken from the above values. In addition, in some cases, j may be chosen such that q, r, and j, and/or k may be chosen such that s, t, and k is 1, or may be near 1, e.g., from 0.8 to 1.2, from 0.9 to 1.1, from 0.95 to 1.05, or from 0.98 to 1.02, etc. In one aspect, such materials may be formed into particles, e.g., using methods such as the ones discussed herein. Without wishing to be bound by any theory, it is believed that control of the composition of such particles was not previously achievable, e.g., to form core/shell particles, or other particles having portions that are compositionally distinguishable. In most cases, NMC materials were previously formed into electroactive materials through multi-step processes, often using different reactors. However, as discussed herein, control of the process for forming NMC particles, such as control of the pH or the reaction temperature, may facilitate the creation of particles having the characteristics described herein, e.g., by controlling the reaction conditions, e.g., to form different portions of the particles. Thus, one set of embodiments is generally directed to electroactive materials formed as particles that may include two or more portions that are compositionally distinguishable, e.g., having a core-shell arrangement. The materials may include NMC materials, such as lithium NMC materials, as described herein. The particles may be relatively monodispersed, or the particles may be present in a range of sizes. The particles may also be spherical or non-spherical.

In certain cases, the particle size (or size distribution) may be determined using D50. The D50 of a plurality of particles is the particle diameter that is larger than fifty (50) percent of the total particle (often denoted as the median number or the mass-median-diameter of the particles, e.g., in a log-normal distribution). The D50 is thus a measure of the average particle diameter, as determined by mass. Equipment for determining the D50 of a sample can be readily obtained commercially, and can include techniques such as sieving or laser light scattering. As discussed herein, the particles can be controlled by controlling the pH or temperature during formation of the particles. It should be noted that although D50 generally refers to the average particle diameter, this does not imply that the particles necessarily must be perfectly spherical; the particles may also be non-spherical as well.

In certain cases, the D50 may be at least about 3 micrometers, at least about 3.5 micrometers, at least about 4 micrometers, at least about 4.5 micrometers, at least about 5 micrometers, at least about 5.5 micrometers, at least about 6 micrometers, at least about 6.5 micrometers, at least about 7 micrometers, at least about 7.5 micrometers, at least about 7.8 micrometers, at least about 8 micrometers, at least about 9 micrometers, at least about 10 micrometers, at least about 11 micrometers, at least about 12 micrometers, at least about 13 micrometers, at least about 14 micrometers, or at least about 15 micrometers. In addition, the D50 may be no more than about 15 micrometers, no more than about 14 micrometers, no more than about 13 micrometers, no more than about 12 micrometers, no more than about 11 micrometers, no more than about 10 micrometers, about 9 micrometers, no more than about 8.5 micrometers, no more than about 8 micrometers, no more than about 7.8 micrometers, no more than about 7.5 micrometers, no more than about 7 micrometers, no more than about 6.5 micrometers, no more than about 6 micrometers, no more than about 5.5 micrometers, no more than about 5 micrometers, no more than about 4.5 micrometers, or no more than about 4 micrometers. Combinations of any of these are also possible in additional environments; for instance, the D50 may be from about 4.0 micrometers to about 7.8 micrometers.

In addition, the particles may exhibit a relatively narrow particle size distribution. Such distributions can be determined, for instance, using Span, which is defined as (D90-D10)/D50, where D90 and D10 are defined similarly to D50 above, except using 90% and 10%, respectively, rather than 50%. For instance, the material may have a particle size distribution (D90-D10)/D50 or Span of from about 0.60 to about 1.10. In some cases, Span may be at least about 0.5, at least about 0.55, at least about 0.6, at least about 0.65, at least about 0.7, at least about 0.75, at least about 0.8, at least 0.85, at least about 0.9, at least about 0.95, or at least about 1. In some cases, Span may be no more than about 1.3, no more than about 1.25, no more than about 1.2, no more than about 1.15, no more than about 1.1, no more than about 1.05, no more than about 1, no more than about 0.95, no more than about 0.9, no more than about 0.85, no more than about 0.8, no more than about 0.75, or no more than about 0.7. Combinations of any of these are also possible in various embodiments; for example, Span may be between 0.5 and 1, between 0.6 and 0.8, between 0.8 and 1.1, or the like.

The shape/size of the particles may be determined, in accordance with certain embodiments, by measuring their tapped density. The tapped density is equal to the sample's mass/volume after a compaction process, typically involving tapping of the sample (for example, 3,000 times) to settle the particles. The tapped density is thus a function of both the shape of the particles (how well the particles fit together into a compacted sample, despite any irregularities in shape) and the sizes of the particles (larger particles typically will not be able to pack closely together as readily, resulting in a lower tapped density).

Accordingly, tapped density is a practical general measure of the relative size, shape, and/or uniformity of the particles, without necessarily requiring in-depth or microscopic analysis of the particles. It should be understood that tapped density is to be distinguished from techniques that involve compressing or crushing the particles (e.g., into a homogenous mass), as doing so does not preserve the shape of the particles; such techniques would be a measure of the bulk density of the material, not the density of the individual particles. In addition, it should be understood that tapped density is not a straightforward function of the size of the particles, and the tapped density cannot be calculated using their average diameter or D50 measurements (e.g., by assuming that the particles are perfect spheres in a face-centered cubic packing), as to do so would ignore the shape distribution and uniformity of the particles.

Mechanical tapping is typically used to determine tapped density, e.g., by repeatedly raising a container containing material and allowing it to drop, under its own mass, a specified, relatively short distance. This may be done multiple times, e.g., hundreds or thousands of times, or until no further significant changes in volume are observed (e.g., since the particles have maximally settled within the sample). In some cases, devices that rotate the material instead of tapping may be used. Standardized methods of determining tapped density include, for instance, ASTM methods B527 or D4781. Equipment for determining the tapped density of a sample (e.g., for automatic tapping) can be easily acquired from commercial sources. Without wishing to be bound by any theory, it is believed that a greater tapped density allows a larger quantity of positive electroactive material to be stored in a limited or specific volume, thereby resulting in a higher volumetric capacity or improved volumetric energy density.

The particles have a tapped density of at least 2.0 g/cm³, at least 2.1 g/cm³, at least 2.2 g/cm³, at least 2.3 g/cm³, or at least 2.4 g/cm³. In addition, the tapped density may be no more than about 2.5 g/cm³, no more than about 2.4 g/cm³, no more than about 2.3 g/cm³, no more than about 2.2 g/cm³, or no more than about 2.1 g/cm³. Combinations of any of these are also possible for example, the particles of the present invention may have a tapped density of 2.00 to 2.40 g/cm³.

As mentioned, in certain embodiments, the particles are core-shell particles, e.g., having a core and a distinguishable shell. The particles may have an average shell thickness of less than about 1.5 micrometers, and in some cases, less than 1.4 micrometers, less than 1.3 micrometers, less than 1.2 micrometers, less than 1.1 micrometers, less than 1.0 micrometers, less than 0.9 micrometers, less than 0.8 micrometers, less than 0.7 micrometers, less than 0.6 micrometers, less than 0.5 micrometers, less than 0.4 micrometers, less than 0.3 micrometers, less than 0.2 micrometers, or less than 0.1 micrometers. In some cases, the average shell thickness may be at least 0.01 micrometers, at least 0.03 micrometers, at least 0.05 micrometers, at least 0.1 micrometers, at least 0.2 micrometers, at least 0.3 micrometers, at least 0.4 micrometers, at least 0.5 micrometers, at least 0.6 micrometers, at least 0.7 micrometers, at least 0.8 micrometers, at least 0.9 micrometers, at least 1 micrometer, etc. Combinations of any of these are also possible in various embodiments; for example, the average shell thickness may be between 0.05 micrometers and 1.1 micrometers. In addition, it should be understood that the shell may be distributed uniformly or non-uniformly around the core. The shell may also be spherically symmetrical or non-spherically symmetrical in some cases.

The particles may have an average core size of at least 1 micrometer, at least 2 micrometers, at least 3 micrometers, at least 4 micrometers, at least 5 micrometers, at least 6 micrometers, at least 7 micrometers, at least 8 micrometers, at least 9 micrometers, at least 10 micrometers, at least 12 micrometers, at least 15 micrometers, etc. In some cases, the average core size may be no more than 20 micrometers, no more than 18 micrometers, no more than 16 micrometers, no more than 15 micrometers, no more than 14 micrometers, no more than 13 micrometers, no more than 12 micrometers, no more than 11 micrometers, no more than 10 micrometers, no more than 9 micrometers, no more than 8 micrometers, no more than 7 micrometers, no more than 6 micrometers, no more than 5 micrometers, etc. Combinations of any of these are also possible in various embodiments. For instance, as a non-limiting example, the particles may have an average core size of between 8 micrometers and 12 micrometers.

At least 50% of the volume of the particles, on average, may be the core, and in some cases, at least 55% at least 60% at least 65% at least 70% at least 75% at least 80% at least 85% at least 90%, or at least 95% the volume of the particles may be the core. In some cases, no more than 95%, no more than 90%, no more than 85%, no more than 80%, no more than 75%, no more than 70%, no more than 65%, no more than 60%, no more than 55%, or no more than 50% of the volume of the particles may be the core. Combinations of any of these are also possible, e.g., the core may comprise between 60% and 80% of the average volume of the particles, in one embodiment.

Certain aspects are also generally directed to techniques for making materials such as those described herein. The material may be synthesized by any method known to one skilled in the art. In one example, a material may be synthesized by a method comprising the steps of preparing a metal precursor comprising nickel, manganese and/or aluminum and cobalt as core, growing a shell metal precursor comprising nickel, manganese and cobalt on the core to form a core-shell metal precursor, mixing the core-shell metal precursor with a lithium-containing salt to form a lithium-metal precursor mixture, and calcining the lithium-metal precursor mixture to obtain the positive electroactive material. The lithium-metal precursor mixture may be calcined at a temperature ranging from about 680 °C to about 880 °C in an oxygen-rich atmosphere.

A core metal precursor comprising nickel, manganese and/or aluminum, and cobalt may be prepared by mixing nickel, manganese and/or aluminum, and cobalt, e.g., by mixing suitable salts of nickel, manganese and/or aluminum, and cobalt. For instance, a core metal precursor may be prepared by preparing a solution containing nickel, manganese and/or aluminum, and cobalt; and co-precipitating the core metal precursor from the solution. In some cases, the solution may be prepared by dissolving salts of nickel, manganese and/or aluminum, and cobalt in a solvent.

A core metal precursor may be prepared by first dissolving a nickel salt, a manganese salt and/or an aluminum salt, and a cobalt salt in a solvent. A wide variety of such salts may be used in various embodiments. For instance, examples of nickel salts include, but are not limited to, nickel sulfate (NiSO₄ or NiSO₄·6H₂O), nickel acetate (Ni (CH₃COO)₂), nickel chloride (NiCl₂), or nickel nitrate (Ni(NO₃)₂ or Ni(NO₃)₂·6H₂O). More than one nickel salt may also be used in some cases. Similarly, non-limiting examples of manganese salts include manganese sulfate (MnSO₄ or MnSO₄·H₂O), manganese acetate (Mn(CH₃COO)₂), manganese chloride (MnCl₂), or manganese nitrate (Mn(NO₃)₂ or Mn(NO₃)₂·4H₂O). More than one manganese salt can also be used in certain instances. Non-limiting examples of aluminum salts include aluminum sulfate (Al₂(SO₄)₃), aluminum nitrate (Al(NO₃)₃), sodium aluminate (NaAlO₂), potassium aluminate (KAlO₂), aluminum alkoxide (Al(OR)₃) (where R is an alkyl, e.g., methyl, ethyl, isopropyl, etc.), or aluminum chloride (AlCl₃). Examples of cobalt salts include, but are not limited to, cobalt sulfate (CoSO₄ or CoSO₄·7H₂O), cobalt acetate (Co(CH₃COO)₂), cobalt chloride (COCl₂), or cobalt nitrate (Co(NO₃)₂ or Co(NO₃)₂·6H₂O). More than one cobalt salt may also be used in some cases. The salts may be used at any suitable concentrations, e.g., from 0.1 mol/l to their respective maximum solubility levels, and the precise concentration is not important. In some embodiments, the concentrations of the metal solutions may be selected based on the desired molar ratio of Ni:Mn:Co or Ni:Al:Co.

In addition, the salts may be dissolved in any of a variety of solvents. The solvent used to prepare the solution may be, for example, distilled water, methanol, ethanol, isopropanol, propanol, or the like. Combinations of any of these solvents may also be used in some cases.

In certain cases, the salts may be reacted with a hydroxide to form a metal precursor. In some cases, the metal precursor may be prepared by co-precipitating nickel, manganese and/or aluminum, and cobalt together, e.g., upon interacting with the hydroxide. Examples of hydroxides that may be used include, but are not limited to, sodium hydroxide, potassium hydroxide, or ammonium hydroxide. In addition, more than one hydroxide may be used in certain instances.

The pH during this reaction may be important. Without wishing to be bound by any theory, it is believed that the pH may be used to control the creation of particles, e.g., by controlling their speed of growth. Accordingly, in some cases, a pH of at least 10 may be used, and in some cases, the pH may be at least 10.2, at least 10.5, at least 10.8, at least 11, or at least 11.5. In some cases, the pH may also be kept within certain limits, e.g., no more than 12, no more than 11.5, no more than 11, no more than 10.8, or no more than 10.5. The pH may also be kept within combinations of these, e.g., the pH may be kept during the reaction between 10.8 and 12. The pH may be controlled, for example, by controlling the amount of hydroxide added to the reaction.

In addition, the temperature may be controlled, e.g., to control growth. In some cases, for example, the temperature of the reaction may be at least 50 °C, at least 55 °C, at least 60 °C, at least 65 °C, at least 70 °C, at least 75 °C, at least 80 °C, at least 85 °C, etc. In addition, the temperature may be controlled to be no more than 90 °C, no more than 85 °C, no more than 80 °C, no more than 75 °C, no more than 70 °C, no more than 75 °C, no more than 60 °C, no more than 55 °C, etc. Additionally, combinations of any of these are also possible for instance, the temperature of the reaction may be kept between 55 °C and 85 °C.

The duration may also be controlled to control growth. For example, the duration of the reaction may be controlled to provide for a residence time of at least 1, at least 2, at least 5, or at least 10 hours, and/or no more than 30, no more than 25, no more than 24, no more than 20, or no more than 18 hours.

The reaction may be performed with little or no access to oxygen (O₂). Thus, for instance, the reaction may be performed in a reactor containing a nitrogen atmosphere, an inert gas atmosphere (e.g., argon), etc., as well as combinations of these and/or other suitable gases that do not contain oxygen.

The amount and/or feed rate of components of the reaction, such as sodium hydroxide, ammonia hydroxide, the pH value, temperature, etc., may be monitored precisely to control the size of the metal precursor. For instance, as a non-limiting illustrative example, the co-precipitation may be carried out at a pH of from about 10.2 to about 11.2 and at a temperature ranging from about 50 °C to about 80 °C. This may be performed, for example, by pumping a solution into a reactor under nitrogen atmosphere. A desired amount of sodium hydroxide (which functions to maintain the desired pH) and ammonia hydroxide may be pumped into the reactor while maintaining a pH ranging from about 10.2 to about 11.2, and a temperature ranging from about 50 °C to about 80 °C.

As mentioned, the reaction discussed above to form core metal precursors may be controlled to control growth. Control of factor such as the pH, the temperature, the stirring rate, and the duration of the reaction may be controlled to control the size and/or size distribution of core particles that are formed. However, after formation of the core particles, a distinguishable shell may be deposited onto the core particles, thereby forming core-shell particles.

The shell may be formed by altering the conditions of the reactor, without removal of the core-metal precursors. Thus, the shell metal precursor may be added without removal of the particles from the reactor. For instance, changes in one or more of the feed, the pH, the temperature, and/or the stirring rate may be used to affect a change in composition, thereby causing a shell to form around the core. However, the cores may be removed from the reactor and separately reacted to form the shell. In some cases, the reactions to produce the core metal precursor and the shell metal precursor may be performed continuously, e.g., without an interruption going from the core metal precursor reaction to the shell metal precursor reaction.

A shell metal precursor is added to the reactor, e.g., instead of the core metal precursor. The shell metal precursor may be formed similarly to the core metal precursor, e.g., as discussed above. For instance, a shell metal precursor may be prepared by first dissolving a nickel salt, a manganese salt, and a cobalt salt in a solvent, as discussed above. However, the concentrations of one or more of these may be different than the core metal precursor in some instances, thereby producing a distinguishable shell composition as compared to the core composition. In some cases, for instance, the shell may have a final composition that has different molar amounts of elements such as nickel, manganese, cobalt, and the like. Shell metal precursor and processes for forming these are as described above with respect to the core metal precursor, but as applied to the shell metal precursor rather than the core metal precursor.

In addition, addition of the shell metal precursor to the core may occur under reaction conditions similar to those described above with respect to the core metal precursor, but as applied to the shell metal precursor rather than the core metal precursor. For example, the amount and/or feed rate of components of the reaction may be monitored precisely to control the size of the metal precursor, or the reaction may be performed with little or no access to oxygen (O₂). Other conditions such as the pH, temperature, and/or stirring rate may also be controlled.

In some cases, conditions such as these may be distinguishable from the conditions used to produce the core. For instance, the pH for reactions for adding the shell metal precursor may be higher or lower than that for the core metal precursor, and may be at least 0.5, at least 1, or at least 1.5 pH units different. Similarly, the temperature for adding the shell metal precursor may be higher or lower than that for the core metal precursor, and may be at least 10 °C, at least 20 °C, at least 30 °C, at least 40 °C, or at least 50 °C different.

The stirring rate (or stirring speed) can be measured as a frequency, e.g., as the number of times a blade or other stirring apparatus passes through a specific location. This may be achieved, for example, by spinning a blade about an axis such that the blades pass through specific locations within a reactor at a certain frequency. (It should be understood, however, that the blades need not pass through every single point within the reactor, and/or some points of the reactor may experience different stirring rates than the overall or average stirring rate.) In some cases, the stirring rate may be quantified as revolutions per minute (abbreviated rpm), although other measures of stirring rate or frequency are also possible (e.g., measured in hertz), e.g., in determining how often a stirring apparatus passes through a specific location within the reactor. In some cases, for instance, the stirring rate, on average for the portions reached by the stirring apparatus, may be at least 50 rpm (or Hz), at least 100 rpm (or Hz), at least 150 rpm (or Hz), at least 200 rpm (or Hz), at least 250 rpm (or Hz), at least 300 rpm (or Hz), at least 350 rpm (or Hz), at least 400 rpm (or Hz), at least 500 rpm (or Hz), at least 600 rpm (or Hz), at least 700 rpm (or Hz), at least 800 rpm (or Hz), at least 900 rpm (or Hz), at least 1000 rpm (or Hz), at least 1100 rpm (or Hz), at least 1200 rpm (or Hz), at least 1300 rpm (or Hz), or at least 1400 rpm (or Hz). In addition, in some cases, the rate may be less than 1500 rpm (or Hz), less than 1400 rpm (or Hz), less than 1300 rpm (or Hz), less than 1200 rpm (or Hz), less than 1100 rpm (or Hz), less than 1000 rpm (or Hz), less than 900 rpm (or Hz), less than 800 rpm (or Hz), less than 700 rpm (or Hz), less than 650 rpm (or Hz), less than 600 rpm (or Hz), less than 550 rpm (or Hz), less than 500 rpm (or Hz), less than 450 rpm (or Hz), less than 400 rpm (or Hz), less than 350 rpm (or Hz), less than 300 rpm (or Hz), less than 250 rpm (or Hz), or less than 200 rpm (or Hz). In some cases, combinations of these may be possible, e.g., the rate may be between 150 rpm and 500 rpm, or between 300 Hz and 400 Hz, etc.

Thus precipitation of the shell metal precursor onto the core particles may be precisely controlled to control the size or thickness of the shell that is formed. For instance, a shell metal precursor comprising nickel, manganese, and cobalt may be grown or precipitated on a core metal precursor to form a core-shell particle.

Thus, as a non-limiting example, a core-shell metal precursor may be prepared by preparing a solution containing nickel, manganese and/or aluminum, and cobalt (e.g., distinguishable from the solution used to prepare the core), and co-precipitating the shell metal precursor on the core metal precursor to form the core-shell metal precursor from the solution. The shell metal precursor, in some cases, may be prepared by dissolving salts of nickel, manganese and cobalt in a solvent. The co-precipitation may be carried out at a pH of from about 10.8 to about 12.0 and at a temperature ranging from about 50 °C to about 80 °C. The solution may be pumped into the reactor containing the core metal precursor under a nitrogen atmosphere. Concurrently, a desired amount of sodium hydroxide (which functions to maintain the desired pH) and ammonia hydroxide may be pumped into the reactor while maintaining a pH ranging from about 10.8 to about 12.0, and a temperature ranging from about 50 °C to about 80 °C to form the core-shell metal precursor composition.

In addition, the metal precursors may be mixed with a lithium-containing salt, or other suitable lithium source, to form a lithium-metal precursor mixture. The amounts of the lithium source and the salts of nickel, manganese and/or aluminum, and cobalt to be used may depend upon the chemical formula of the desired positive electroactive material. The quantity should be compensated for waste occurring during the reaction. For example, the metal precursors, after precipitation, may be removed and dried (e.g., to remove excess solvent), then exposed to a suitable lithium source. Examples of lithium sources include, but are not limited to, lithium hydroxide (LiOH or LiOH·H₂O) or lithium carbonate (Li₂CO₃). More than one lithium source may also be used in some cases. In some cases, the lithium source and the metal precursor are mixed together mechanically. The amount of lithium added may be determined by the desired chemical formula of the material. However, in some cases, excess amounts of lithium and/or metal precursor may be used, e.g., to compensate for waste or other inefficiencies that may occur during formation.

The lithium-metal precursor mixture may then be heated or calcined. The calcination temperature may be selected, for example, according to the electrochemical performance of the materials prepared under different temperatures. Such heating may be used to remove water and/or various impurities from the mixture to form the final composition. For instance, calcination may cause hydroxides to be removed as water (H₂O), carbonates to be removed as CO₂, sulfates to be removed as SOₓ, nitrates to be removed as NOₓ, etc. In some embodiments, relatively high temperatures may be used, e.g., temperatures of at least 700 °C, at least 720 °C, at least 740 °C, at least 760 °C, at least 800 °C, at least 820 °C, at least 840 °C, at least 860 °C, at least 880 °C, at least 900 °C, etc. In addition, the temperature, in some embodiments, may be kept to no more than 1000 °C, no more than 980 °C, no more than 960 °C, no more than 940 °C, no more than 920 °C, no more than 900 °C, etc. Combinations of any of these are also possible in certain embodiments, e.g., between 820 °C and 960 °C. In some cases, the duration of heating or calcination may be at least 1, at least 2, at least 5, or at least 10 hours, and/or no more than 30, no more than 25, no more than 24, no more than 20, or no more than 18 hours. In one set of embodiments, for instance, calcination may occur at a temperature ranging from about 820 °C to about 960 °C for a duration ranging from 10 to 18 hours. Thus, as a non-limiting example, a lithium-core-shell metal precursor mixture may be calcined at a temperature ranging from about 680 °C to about 880 °C. In some cases, the desired electrochemical performance of the materials may dictate calcination temperature and/or duration of their preparation. After calcination or heating, the composition may form particles, e.g., as discussed herein.

In some aspects, an electrochemical cell may be produced using a material as described herein. For example, a lithium ion electrochemical cell may be prepared using a lithium intercalation negative electroactive material, a cathode comprising a material as described herein, a suitable electrolyte (e.g., a non-aqueous electrolyte), and a separator between the negative electroactive material and the positive electroactive material.

A variety of cathode materials may be used in an electrochemical cell, e.g., in conjunction with the electroactive materials described herein. Many such cathode materials are known to those of ordinary skill in the art, and several are readily available commercially. For example, the electroactive materials described herein may be combined with carbon black and a suitable binder to form a cathode for use in an electrochemical cell.

As a non-limiting example, in one embodiment, a cathode may be prepared using the following steps: (i) mixing 2-3 wt% polyvinylidene fluoride (PVDF) binder in *N*-methyl-2-pyrrolidone (NMP) to form an NMP-binder mixture; (ii) mixing the NMP-binder mixture with the positive electroactive material and carbon black to form a mixture containing 80 wt% positive electroactive material, 10 wt% carbon black and 10 wt% NMP-binder mixture ("the 80:10:10 mixture"); (iii) transferring the 80:10:10 mixture into a ball mill, and milling the mixture at 800 rpm for 30 min with ten 5 mm diameter zirconia balls to form a slurry, wherein the zirconia balls function as a medium for more effective mixing; (iv) preparing a current collector by spreading aluminum foil onto a glass plate and spraying acetone to ensure that there are no air bubbles between the foil and the glass plate; (v) applying the slurry onto the aluminum foil, spreading uniformly on to the foil using a razor blade to form a coating film; and (vi) drying the coating in a vacuum at 110 °C for 12 hours to form the positive electroactive material.

Similarly, a variety of negative electroactive materials may be used, many of which can be obtained commercially. For example, graphite or lithium foil may be used in the electrochemical cell as a lithium intercalation negative electroactive material.

A variety of electrolytes may also be used in various embodiments. The electrolyte may be aqueous or non-aqueous. Non-limiting examples of suitable non-aqueous electrolytes include lithium hexafluorophosphate (LiPF₆) in ethylene carbonate (EC) and dimethyl carbonate (DMC), lithium hexafluorophosphate (LiPF₆) in ethylene carbonate (EC) and diethyl carbonate (DEC), or lithium hexafluorophosphate (LiPF₆) in ethylene carbonate (EC) and ethyl methyl carbonate (EMC). Specific non-limiting examples of suitable non-aqueous electrolytes are 1 mol/L lithium hexafluorophosphate (LiPF₆) in ethylene carbonate (EC) and dimethyl carbonate (DMC), 1 mol/L lithium hexafluorophosphate (LiPF₆) in ethylene carbonate (EC) and diethyl carbonate (DEC), and 1 mol/L lithium hexafluorophosphate (LiPF₆) in ethylene carbonate (EC) and ethyl methyl carbonate (EMC).

A variety of separates can also be used in various embodiments. Examples of separators include, but are not limited to, the Celgard 2400, 2500, 2340, and 2320 models.

Int. Pat. Apl. Ser. No. PCT/US16/52627, filed September 20, 2016, entitled "Nickel-Based Positive Electrode Materials," is referenced herein. In addition, U.S. Pat. Apl. Ser. No. 62/435,669, filed December 16, 2016, entitled "Electroactive Materials for Lithium-Ion Batteries and Other Applications," and Int. Pat. Apl. Ser. No. PCT/US2017/066381, filed December 14, 2017, entitled "Electroactive Materials for Lithium-Ion Batteries and Other Applications," are also each referenced herein. U.S. Provisional Pat. Apl. Ser. No. 62/461,890, filed February 22, 2017, entitled "Core-Shell Electroactive Materials," is referenced herein.

The following examples are intended to illustrate certain embodiments of the present invention, but do not exemplify the full scope of the invention.

### EXAMPLE 1

Four (4) samples of positive electroactive materials were prepared as follows. In the amounts listed in Table 1 for the core parts of each sample, NiSO₄•6H₂O, MnSO₄•H₂O and CoSO₄•7H₂O were dissolved in distilled water to form a 2 mol/L mixed metal sulfate solution. The mixed metal sulfate solution was then slowly pumped into a reactor under a nitrogen atmosphere at a temperature of 55 °C. Concurrently, a 23% NaOH solution and an 18% NH₄OH solution were separately pumped into the reactor and a core metal precursor was precipitated. The pH was kept constant at 10.6 before and after the solution being pumped into the reactor. The concentration of the solution, pH, temperature, and stirring speed of the reaction mixture were carefully monitored and controlled during the process. The pH was monitored using a pH meter, and controlled by adjusting the feed rate of NaOH. The temperature was controlled using a temperature controller and a heat exchanger. Stirring was controlled using a PID controller. Feeding rating was controlled by a digital chemical feeding pump.

For the amounts listed in Table 1 for shell part of each sample, NiSO₄•6H₂O, MnSO₄•H₂O and CoSO₄•7H₂O were dissolved in distilled water to form another 2 mol/L mixed metal sulfate solution. The mixed metal sulfate solution was then slowly pumped into the same reactor which contains the core metal precursor discussed above under a nitrogen atmosphere at a temperature of 65 °C. Concurrently, a 23% NaOH solution and an 18% NH₄OH solution were also separately pumped into the reactor and the shell was precipitated on the core metal precursor. The pH was kept constant at 11.4 before and after the solution being pumped into the reactor. The concentration of the solution, feeding rate, pH, temperature, and stirring rate of the reaction mixture were carefully monitored and controlled during the process, e.g., as discussed above. The core-shell metal precursor was then formed. Stirring rate can be quantified as revolutions per minute (abbreviated rpm), which is a measure of the frequency of rotation, specifically the number of rotations around a stirrer axis in one minute. The stirring rate ranged from 150 rpm to 500 rpm.

The core-shell metal precursor was filtered and washed to remove residual ions such as Na⁺ and SO₄²⁻, and then dried in a vacuum oven at 110 °C for 12 hours. The core-shell metal complex hydroxide precursor was then mixed thoroughly in a mixing machine with the amount of LiOH required to obtain the molar ratio listed in Table 1. Finally, the mixture was calcined in oxygen at the temperature listed in Table 1 for each sample to produce the positive electroactive material. Table 1 lists the molar percentages of nickel, manganese, and cobalt and the molar ratio of Li/(Ni+Mn+Co) in the resulting positive electroactive materials, the calcination temperature (in °C) used to prepare Samples 1-4 and the Span for each sample.

**Table 1**

| Sample | Core | | | | | | Shell | | | | | | Molar Ratio of Li/(Ni+Mn+Co) | Calcination temp (°C) | Span |
|---|---|---|---|---|---|---|---|---|---|---|---|---|---|---|---|
| | NiSO₄•6H₂O (g) | MnSO₄•H₂O (g) | CoSO₄•7H₂O (g) | Ni (%) | Mn (%) | Co (%) | NiSO₄•6H₂O (g) | MnSO₄•H₂O (g) | CoSO₄•7H₂O (g) | Ni (%) | Mn (%) | Co (%) | | | |
| 1 | 367.99 | 29.58 | 49.19 | 80 | 10 | 10 | 98.57 | 38.03 | 42.16 | 50 | 30 | 20 | 1.02 | 800 | 0.62 |
| 2 | 461.30 | 16.48 | 27.41 | 90 | 5 | 5 | 34.17 | 7.32 | 12.18 | 60 | 20 | 20 | 1.05 | 720 | 0.73 |
| 3 | 430.55 | 26.37 | 43.85 | 84 | 8 | 8 | 49.15 | 30.68 | 51.02 | 34 | 33 | 33 | 1.05 | 770 | 0.71 |
| 4 | 483.64 | 13.52 | 22.49 | 92 | 4 | 4 | 52.57 | 33.80 | 28.11 | 40 | 40 | 20 | 1.04 | 680 | 0.77 |

### EXAMPLE 2

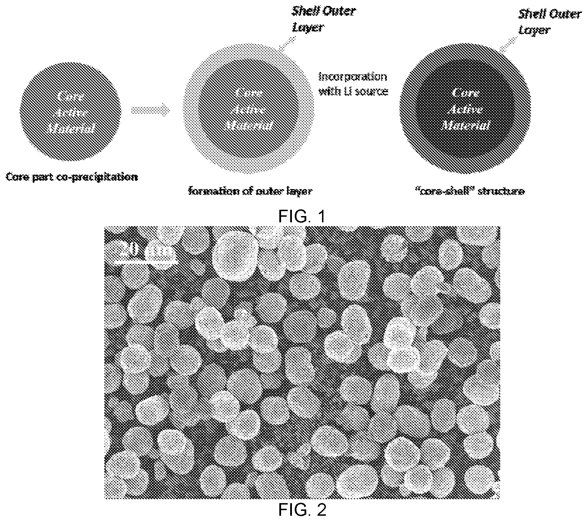

LEO 1550 Field Emission Scanning Electron Microscopy (FESEM) images were taken of the Sample 1 electroactive material prepared in Example 1 to illustrate the morphology of the positive electroactive material. The SEM images appear in Fig. 2.

### EXAMPLE 3

The Span (D90-D10)/D50 of each of Samples 1 to 4 prepared in Example 1 was measured using a Bettersize BT-9300ST Laser Particle Size Analyzer. The equipment parameters and sample information were set, and a suitable amount of sample was added to the disperse pool for testing. After the test was completed, the Span for each sample was calculated using the equation (D90-D10)/D50. Table 1 lists the Span for Samples 1-4. The data shows that the positive electroactive materials were uniform, with relatively narrow size distribution.

### EXAMPLE 4

Electrochemical cells were constructed as follows using the positive electroactive materials of Samples 1-4 prepared in Example 1 as the cathode. However, other ways of constructing electrochemical cells are also possible. The cathodes used in these examples were prepared as follows: (i) mixing 2-3 wt% polyvinylidene fluoride (PVDF) binder in N-methyl-2-pyrrolidone (NMP) to form an NMP-binder mixture; (ii) mixing the NMP-binder mixture with the positive electroactive material and carbon black to form a mixture containing 80 wt% positive electroactive material, 10 wt% carbon black and 10 wt% NMP-binder mixture ("the 80:10:10 mixture"); (iii) transferring the 80:10:10 mixture into a ball mill, and milling the mixture at 800 rpm for 30 min with ten 5 mm diameter zirconia balls to form a slurry, where the zirconia balls function as a medium for more effective mixing; (iv) preparing a current collector by spreading aluminum foil onto a glass plate and spraying acetone to ensure that there are no air bubbles between the foil and the glass plate; (v) applying the slurry onto the aluminum foil, spreading uniformly on to the foil using a razor blade to form a coating film; and (vi) drying the coating in a vacuum at 110 °C for 12 hours to form the positive electroactive material. A set of four (4) lithium ion electrochemical cells were then prepared by combining a lithium intercalation negative electroactive material, a carbonate non-aqueous electrolyte, a separator, and the positive electroactive material of each of Samples 1-4.

All definitions, as defined and used herein, should be understood to control over dictionary definitions and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

When the word "about" is used herein in reference to a number, it should be understood that still another embodiment of the invention includes that number not modified by the presence of the word "about."

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of' and "consisting essentially of' shall be closed or semi-closed transitional phrases, respectively, as set forth in the United States Patent Office Manual of Patent Examining Procedures, Section 2111.03.

## Claims

1. A composition, comprising:
a material having a formula (Li₁₊ₐ(Ni_{q}MᵣCo_{1-q-r})O₂)ₓ(Li₁₊ₐ(NiₛMnₜCo₁₋ₛ₋ₜ)O₂)₁₋ₓ,
wherein:
M is Mn and/or Al;
x is a numerical value inclusively ranging from 0.70 to 0.95;
a is a numerical value inclusively ranging from 0.01 to 0.07;
q is a numerical value inclusively ranging from 0.80 to 0.96;
r is a numerical value inclusively ranging from 0.01 to 0.10;
s is a numerical value inclusively ranging from 0.34 to 0.70;
t is a numerical value inclusively ranging from 0.20 to 0.40;
1-q-r is greater than 0; and
1-s-t is greater than 0.

2. The composition of claim 1, wherein the material comprises:
(a) a plurality of particles; and/or
(b) a first phase comprising the Li₁₊ₐ(Ni_{q}MᵣCo_{1-q-r})O₂, and a second phase comprising the Li₁₊ₐ(NiₛMnₜCo₁₋ₛ₋ₜ)O₂.

3. The composition of claim 2(b), wherein the second phase surrounds the first phase.

4. The composition of any one of claims 1-3, wherein q inclusively ranges from 0.80 to 0.95; r inclusively ranges from 0.04 to 0.10; s inclusively ranges from 0.34 to 0.65; t inclusively ranges from 0.20 to 0.35; 1-q-r inclusively ranges from 0.04 to 0.10; 1-s-t inclusively ranges from 0.20 to 0.35; x inclusively ranges from 0.80 to 0.95; and/or a inclusively ranges from 0.02 to 0.05.

5. The composition of any one of claims 1-4, wherein the material has an average D50 particle size of less than 14 micrometers.

6. An electrochemical cell, comprising:
a positive electroactive material comprising the composition of any one of claims 1-5;
a negative electroactive material; and
a separator separating the positive electroactive material and the negative electroactive material,
preferably wherein the electrochemical cell is used in a battery.

7. A process for forming the material of the composition of any one of claims 1-5 or the electrochemical cell of claim 6, comprising:
precipitating nickel, manganese, and cobalt from a first solution to produce particles; and
precipitating nickel, manganese, and cobalt from a second solution onto the particles to form core-shell particles, preferably wherein:
(a) the first and second precipitating steps occurs within the same reactor;
(b) the first solution has a first pH and the second solution has a second pH, wherein the second pH is greater than the first pH; and/or
(c) the second pH is at least 1 pH unit greater than the first pH; and/or
(d) the first pH is at least 10; and/or
(e) the second pH is at least 11.

8. The process of claim 7, wherein the first precipitating step occurs at a first temperature and the second precipitating step occurs at a second temperature, preferably wherein:
(a) the second temperature is at least 10°C greater than the first temperature; and/or
(b) the first temperature is at least 50°C; and/or
(c) the first temperature is at least 60°C; and/or
(d) the first precipitating step occurs at a first stirring speed and the second precipitating step occurs at a second stirring speed.

9. The process of claim 7, wherein:
precipitating nickel, manganese, and cobalt from a first solution to produce particles comprises precipitating nickel, manganese and/or aluminum, and cobalt from a first solution to produce particles in a reactor; and
precipitating nickel, manganese, and cobalt from a second solution onto the particles to form core-shell particles comprises precipitating nickel, manganese, and cobalt from a second solution onto the particles to form core-shell particles within the reactor.

10. The process of claim 9, wherein the particles are not removed from the reactor prior to precipitating nickel, manganese, and cobalt salt from the second solution.

11. The process of any one of claims 9 or 10, wherein the first solution has a first pH and the second solution has a second pH, wherein the second pH is greater than the first pH, preferably wherein the second pH is at least 1 pH unit greater than the first pH, and/or wherein the first pH is at least 10, preferably between 10.2 and 11.2; and/or wherein the second pH is at least 11, preferably between 11 and 12.

12. The process of any one of claims 9-11, further comprising mixing the core-shell particles with a lithium-containing salt to form a lithium-metal precursor mixture, preferably further comprising calcining the lithium-metal precursor mixture, preferably at a temperature of between 680°C and 880°C, and/or wherein the lithium-containing salt comprises lithium carbonate and/or lithium hydroxide.

13. The process of any one of claims 9-12, wherein:
the first solution comprises one or more of nickel sulfate, nickel acetate, nickel chloride, nickel nitrate, manganese sulfate, manganese acetate, manganese chloride, manganese nitrate, aluminum sulfate, aluminum chloride, aluminum nitrate, cobalt sulfate, cobalt acetate, cobalt chloride, and/or cobalt nitrate; and
the second solution comprises one or more of nickel sulfate, nickel acetate, nickel chloride, nickel nitrate, manganese sulfate, manganese acetate, manganese chloride, manganese nitrate, cobalt sulfate, cobalt acetate, cobalt chloride, and/or cobalt nitrate.

14. The process of any one of claims 9-13, wherein the first solution comprises methanol and/or ethanol, and the second solution comprises methanol and/or ethanol.

15. The process of any one of claims 9-14, wherein precipitating nickel, manganese and/or aluminum, and cobalt from a first solution comprises precipitating nickel, manganese and/or aluminum, and cobalt from a first solution at a temperature of between 50°C and 80°C; and
precipitating nickel, manganese, and cobalt from a second solution comprises precipitating nickel, manganese, and cobalt from a second solution at a temperature of between 50°C and 80°C.

## Patentansprüche

1. Zusammensetzung, Folgendes umfassend:
ein Material mit einer Formel (Li₁₊ₐ(Ni_{q}MᵣCo_{1-q-r})O₂)ₓ(Li₁₊ₐ(NiₛMnₜCo₁₋ₛ₋ₜ)O₂)₁₋ₓ,
wobei:
M Mn und/oder Al ist;
x ein numerischer Wert ist, der einschließlich von 0,70 bis 0,95 reicht;
a ein numerischer Wert ist, der einschließlich von 0,01 bis 0,07 reicht;
q ein numerischer Wert ist, der einschließlich von 0,80 bis 0,96 reicht;
r ein numerischer Wert ist, der einschließlich von 0,01 bis 0,10 reicht;
s ein numerischer Wert ist, der einschließlich von 0,34 bis 0,70 reicht;
t ein numerischer Wert ist, der einschließlich von 0,20 bis 0,40 reicht;
1-q-r größer als 0 ist; und
1-s-t größer als 0 ist.

2. Zusammensetzung nach Anspruch 1, wobei das Material Folgendes umfasst:
(a) mehrere Partikel; und/oder
(b) eine erste Phase, die das Li₁₊ₐ(Ni_{q}MᵣCo_{1-q-r})O₂ umfasst und eine zweite Phase, die das Li₁₊ₐ(NiₛMnₜCo₁₋ₛ₋ₜ)O₂ umfasst.

3. Zusammensetzung nach Anspruch 2(b), wobei die zweite Phase die erste Phase umgibt.

4. Zusammensetzung nach einem der Ansprüche 1-3, wobei q einschließlich von 0,80 bis 0,95 reicht; r einschließlich von 0,04 bis 0,10 reicht; s einschließlich von 0,34 bis 0,65 reicht; t einschließlich von 0,20 bis 0,35 reicht; 1-q-r einschließlich von 0,04 bis 0,10 reicht; 1-s-t einschließlich von 0,20 bis 0,35 reicht; x einschließlich von 0,80 bis 0,95 reicht; und/oder a einschließlich von 0,02 bis 0,05 reicht.

5. Zusammensetzung nach einem der Ansprüche 1-4, wobei das Material eine durchschnittliche D50-Partikelgröße von weniger als 14 Mikrometern aufweist.

6. Elektrochemische Zelle, Folgendes umfassend:
ein positives elektroaktives Material, umfassend die Zusammensetzung nach einem der Ansprüche
1-5;
ein negatives elektroaktives Material; und
einen Separator, der das positive elektroaktive Material und das negative elektroaktive Material trennt,
bevorzugt wobei die elektrochemische Zelle in einer Batterie verwendet wird.

7. Vorgang zum Ausbilden des Materials der Zusammensetzung nach einem der Ansprüche 1-5 oder der elektrochemischen Zelle nach Anspruch 6, Folgendes umfassend:
Ausfällen von Nickel, Mangan und Kobalt aus einer ersten Lösung, um Partikel zu erzeugen; und
Ausfällen von Nickel, Mangan und Kobalt aus einer zweiten Lösung auf die Partikel, um Kern-Schale-Partikel auszubilden, bevorzugt wobei:
(a) der erste und der zweite Ausfällungsschritt innerhalb desselben Reaktors erfolgen;
(b) die erste Lösung einen ersten pH-Wert aufweist und die zweite Lösung einen zweiten pH-Wert aufweist, wobei der zweite pH-Wert größer ist als der erste pH-Wert; und/oder
(c) der zweite pH-Wert um wenigstens 1 pH-Wert-Einheit größer ist als der erste pH-Wert; und/oder
(d) der erste pH-Wert wenigstens 10 ist; und/oder
(e) der zweite pH-Wert wenigstens 11 ist.

8. Vorgang nach Anspruch 7, wobei der erste Ausfällungsschritt bei einer ersten Temperatur erfolgt und der zweite Ausfällungsschritt bei einer zweiten Temperatur erfolgt, bevorzugt wobei:
(a) die zweite Temperatur wenigstens 10 °C höher ist als die erste Temperatur; und/oder
(b) die erste Temperatur wenigstens 50 °C beträgt; und/oder
(c) die erste Temperatur wenigstens 60 °C beträgt; und/oder
(d) der erste Ausfällungsschritt bei einer ersten Rührgeschwindigkeit erfolgt und der zweite Ausfällungsschritt bei einer zweiten Rührgeschwindigkeit erfolgt.

9. Vorgang nach Anspruch 7, wobei:
das Ausfällen von Nickel, Mangan und Kobalt aus einer ersten Lösung, um Partikel herzustellen, das Ausfällen von Nickel, Mangan und/oder Aluminium und Kobalt aus einer ersten Lösung umfasst, um Partikel in einem Reaktor herzustellen; und
das Ausfällen von Nickel, Mangan und Kobalt aus einer zweiten Lösung auf die Partikel, um Kern-Schale-Partikel auszubilden, das Ausfällen von Nickel, Mangan und Kobalt aus einer zweiten Lösung auf die Partikel innerhalb des Reaktors umfasst, um Kern-Schale-Partikel auszubilden.

10. Vorgang nach Anspruch 9, wobei die Partikel nicht aus dem Reaktor entfernt werden, bevor Nickel-, Mangan- und Cobaltsalz aus der zweiten Lösung ausgefällt werden.

11. Vorgang nach einem der Ansprüche 9 oder 10, wobei die erste Lösung einen ersten pH-Wert aufweist und die zweite Lösung einen zweiten pH-Wert aufweist, wobei der zweite pH-Wert größer ist als der erste pH-Wert, wobei der zweite pH-Wert bevorzugt um wenigstens 1 pH-Wert-Einheit größer ist als der erste pH-Wert und/oder wobei der erste pH-Wert wenigstens 10, bevorzugt zwischen 10,2 und 11,2 ist; und/oder wobei der zweite pH-Wert wenigstens 11, bevorzugt zwischen 11 und 12 ist.

12. Vorgang nach einem der Ansprüche 9-11, ferner umfassend ein Mischen der Kern-Schale-Partikel mit einem lithiumhaltigen Salz, um eine Lithium-Metall-Vorläufermischung auszubilden, bevorzugt ferner umfassend ein Kalzinieren der Lithium-Metall-Vorläufermischung, bevorzugt bei einer Temperatur zwischen 680 °C und 880 °C und/oder wobei das lithiumhaltige Salz Lithiumcarbonat und/oder Lithiumhydroxid umfasst.

13. Vorgang nach einem der Ansprüche 9-12, wobei:
die erste Lösung eines oder mehrere aus Folgendem umfasst: Nickelsulfat, Nickelacetat, Nickelchlorid, Nickelnitrat, Mangansulfat, Manganacetat, Manganchlorid, Mangannitrat, Aluminiumsulfat, Aluminiumchlorid, Aluminiumnitrat, Kobaltsulfat, Kobaltacetat, Kobaltchlorid und/oder Kobaltnitrat; und
die zweite Lösung eines oder mehrere aus Folgendem umfasst: Nickelsulfat, Nickelacetat, Nickelchlorid, Nickelnitrat, Mangansulfat, Manganacetat, Manganchlorid, Mangannitrat, Kobaltsulfat, Kobaltacetat, Kobaltchlorid und/oder Kobaltnitrat.

14. Vorgang nach einem der Ansprüche 9-13, wobei die erste Lösung Methanol und/oder Ethanol umfasst und die zweite Lösung Methanol und/oder Ethanol umfasst.

15. Vorgang nach einem der Ansprüche 9-14, wobei das Ausfällen von Nickel, Mangan und/oder Aluminium und Kobalt aus einer ersten Lösung das Ausfällen von Nickel, Mangan und/oder Aluminium und Kobalt aus einer ersten Lösung bei einer Temperatur zwischen 50 °C und 80 °C umfasst; und
das Ausfällen von Nickel, Mangan und Kobalt aus einer zweiten Lösung das Ausfällen von Nickel, Mangan und Kobalt aus einer zweiten Lösung bei einer Temperatur zwischen 50 °C und 80 °C umfasst.

## Revendications

1. Composition comprenant :
un matériau ayant la formule (Li₁₊ₐ(Ni_{q}MᵣCo_{1-q-r})O₂)ₓ(Li₁₊ₐ(NiₛMnₜ)Co₁₋ₛ₋ₜ)O₂)₁₋ₓ,
dans laquelle :
M est Mn et/ou Al ;
x est une valeur numérique comprise entre 0,70 et 0,95 inclus ;
a est une valeur numérique comprise entre 0,01 et 0,07 inclus ;
q est une valeur numérique comprise entre 0,80 et 0,96 inclus ;
r est une valeur numérique comprise entre 0,01 et 0,10 inclus ;
s est une valeur numérique comprise entre 0,34 et 0,70 inclus ;
t est une valeur numérique comprise entre 0,20 et 0,40 ;
1-q-r est supérieur à 0 ; et
1-s-t est supérieur à 0.

2. Composition selon la revendication 1, dans laquelle le matériau comprend :
(a) une pluralité de particules ; et/ou
(b) une première phase comprenant le Li₁₊ₐ(Ni_{q}MᵣCo_{1-q-r})O₂, et une seconde phase comprenant le Li₁₊ₐ(NiₛMnₜCo₁₋ₛ₋ₜ)O₂.

3. Composition selon la revendication 2(b), dans laquelle la seconde phase entoure la première phase.

4. Composition selon l'une quelconque des revendications 1 à 3, dans laquelle q varie de 0,80 à 0,95 inclus ; r varie de 0,04 à 0,10 inclus ; s varie de 0,34 à 0,65 inclus ; t varie de 0,20 à 0,35 inclus ; 1-q-r varie de 0,04 à 0,10 inclus ; 1-s-t varie de 0,20 à 0,35 inclus ; x varie de 0,80 à 0,95 inclus ; et/ou a varie de 0,02 à 0,05 inclus.

5. Composition selon l'une quelconque des revendications 1 à 4, dans laquelle le matériau a une taille de particule D50 moyenne inférieure à 14 micromètres.

6. Cellule électrochimique, comprenant :
un matériau électroactif positif comprenant la composition selon l'une quelconque des revendications 1 à 5 ;
un matériau électroactif négatif ; et
un séparateur séparant le matériau électroactif positif et le matériau électroactif négatif,
de préférence dans laquelle la cellule électrochimique est utilisée dans une batterie.

7. Procédé pour former le matériau de la composition selon l'une quelconque des revendications 1 à 5 ou la cellule électrochimique selon la revendication 6, comprenant :
la précipitation de nickel, de manganèse et de cobalt à partir d'une première solution pour produire des particules ; et
la précipitation de nickel, de manganèse et de cobalt à partir d'une seconde solution sur les particules pour former des particules noyau-enveloppe, de préférence dans laquelle :
(a) la première et la seconde étape de précipitation se déroulent à l'intérieur du même réacteur ;
(b) la première solution a un premier pH et la seconde solution a un second pH, le second pH étant supérieur au premier pH ; et/ou
(c) le second pH est supérieur d'au moins 1 unité de pH au premier pH ; et/ou
(d) le premier pH est d'au moins 10 ; et/ou
(e) le second pH est d'au moins 11.

8. Procédé selon la revendication 7, dans lequel la première étape de précipitation se déroule à une première température et la seconde étape de précipitation se déroule à une seconde température, de préférence dans lequel :
(a) la seconde température est supérieure d'au moins 10 °C à la première température ; et/ou
(b) la première température est d'au moins 50 °C ; et/ou
(c) la première température est d'au moins 60 °C ; et/ou
(d) la première étape de précipitation se déroule à une première vitesse d'agitation et la seconde étape de précipitation se déroule à une seconde vitesse d'agitation.

9. Procédé selon la revendication 7, dans lequel :
la précipitation de nickel, de manganèse et de cobalt à partir d'une première solution pour produire des particules comprend la précipitation de nickel, de manganèse et/ou d'aluminium et de cobalt à partir d'une première solution pour produire des particules dans un réacteur ; et
la précipitation de nickel, de manganèse et de cobalt à partir d'une seconde solution sur les particules pour former des particules noyau-enveloppe comprend la précipitation de nickel, de manganèse et de cobalt à partir d'une seconde solution sur les particules pour former des particules noyau-enveloppe à l'intérieur du réacteur.

10. Procédé selon la revendication 9, dans lequel les particules ne sont pas retirées du réacteur avant la précipitation de nickel, de manganèse et de sel de cobalt à partir de la seconde solution.

11. Procédé selon l'une quelconque des revendications 9 ou 10, dans lequel la première solution a un premier pH et la seconde solution a un second pH, dans lequel le second pH est supérieur au premier pH, de préférence dans lequel le second pH est supérieur d'au moins 1 unité de pH au premier pH, et/ou dans lequel le premier pH est d'au moins 10, de préférence entre 10,2 et 11,2 ; et/ou dans lequel le second pH est d'au moins 11, de préférence entre 11 et 12.

12. Procédé selon l'une quelconque des revendications 9 à 11, comprenant en outre le mélange des particules noyau-enveloppe avec un sel contenant du lithium pour former un mélange précurseur lithium-métal, de préférence comprenant en outre la calcination du mélange précurseur lithium-métal, de préférence à une température comprise entre 680 °C et 880 °C, et/ou dans lequel le sel contenant du lithium comprend du carbonate de lithium et/ou de l'hydroxyde de lithium.

13. Procédé selon l'une quelconque des revendications 9 à 12, dans lequel :
la première solution comprend un ou plusieurs des éléments suivants : du sulfate de nickel, de l'acétate de nickel, du chlorure de nickel, du nitrate de nickel, du sulfate de manganèse, de l'acétate de manganèse, du chlorure de manganèse, du nitrate de manganèse, du sulfate d'aluminium, du chlorure d'aluminium, du nitrate d'aluminium, du sulfate de cobalt, de l'acétate de cobalt, du chlorure de cobalt et/ou du nitrate de cobalt, et
la seconde solution comprend un ou plusieurs des éléments suivants : du sulfate de nickel, de l'acétate de nickel, du chlorure de nickel, du nitrate de nickel, du sulfate de manganèse, de l'acétate de manganèse, du chlorure de manganèse, du nitrate de manganèse, du sulfate de cobalt, de l'acétate de cobalt, du chlorure de cobalt et/ou du nitrate de cobalt.

14. Procédé selon l'une quelconque des revendications 9 à 13, dans lequel la première solution comprend du méthanol et/ou de l'éthanol, et la seconde solution comprend du méthanol et/ou de l'éthanol.

15. Procédé selon l'une quelconque des revendications 9 à 14, dans lequel la précipitation de nickel, de manganèse et/ou d'aluminium et de cobalt à partir d'une première solution comprend la précipitation de nickel, de manganèse et/ou d'aluminium et de cobalt à partir d'une première solution à une température comprise entre 50 °C et 80 °C ; et
la précipitation de nickel, de manganèse et de cobalt à partir d'une seconde solution comprend la précipitation de nickel, de manganèse et de cobalt à partir d'une seconde solution à une température comprise entre 50 °C et 80 °C.
